(19) Europäisches Patentamt
European Patent Office
Office européen des brevets

(11) **EP 3 886 356 A1**

(12) **EUROPEAN PATENT APPLICATION**

(43) Date of publication:
**29.09.2021 Bulletin 2021/39**

(51) Int Cl.:
***H04L 9/08*** (2006.01)

(21) Application number: **20165052.0**

(22) Date of filing: **23.03.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Deutsche Telekom AG**
**53113 Bonn (DE)**

(72) Inventors:
• **GUNKEL, Matthias**
**64291 Darmstadt (DE)**

• **WISSEL, Felix**
**64372 Ober-Ramstadt (DE)**

(74) Representative: **Raible Deissler Lehmann**
**Patentanwälte PartG mbB**
**Senefelderstrasse 26**
**70176 Stuttgart (DE)**

Remarks:
Amended claims in accordance with Rule 137(2) EPC.

(54) **METHOD AND SYSTEM OF QUANTUM KEY DISTRIBUTION**

(57) The present invention refers to a method of quantum key distribution comprising a quantum exchange step and a subsequent key agreement step, wherein in the quantum exchange step, a first quantum node (501) prepares a first quantum signal in one of two selectable bases and transmits the first quantum signal to a common intermediate node (503) over a first quantum link (541), a second quantum node (502) prepares a second quantum signal in one of the two selectable bases and transmits the second quantum signal to the common intermediate node (503) over a second quantum link (542), the common intermediate quantum node (503) measures simultaneously and synchronically the first quantum signal and the second quantum signal using a system of coupled detectors in one of the two selectable bases and gives the random selection of basis and information about whether the measurements on the two quantum signals match or not, as an event to the first quantum node (501) and the second quantum node (502), respectively, over a classical link, respectively, and the first quantum node (501) and the second quantum node (502) exchange further information about the received events wherein, in the key agreement step, a key is generated by assigning bit values for the events according to a previously agreed assignment. The present invention also refers to a respective quantum distribution network.

Figure 7

**Description**

The present invention refers to a method and system of quantum key generation and distribution. Particularly, the invention refers to a method and system to mitigate range limitations in QKD (Quantum Key Distribution) mechanisms.

The term "quantum cryptography" refers to the joint application of classical, symmetrical algorithms and techniques based on quantum physical laws of nature to generate a common and secret key between two communication partners, the communication partners being called in the following Alice and Bob.

For confidentiality and authenticity of messages and/or for proof of the integrity of those messages, algorithms are used which are known in the art, such as AES (Advanced Encryption Standard) or so-called One Time Pads (OTPs). For the key exchange, mathematical methods according, for example, to the DH algorithm (after W. Diffie, M. Hellmann and also R. Merkle) either in the space of positive integers or in the space of elliptic curves (DHEC - Diffie Hellman Elliptic Curve) are used.

Due to the progress in the development of quantum computers it will be increasingly likely that classical and complexity-based algorithms will no longer be used for the key exchange. A possible counter measure is the usage of quantum mechanical procedures which deters an attacker from getting knowledge about the common secret between Alice and Bob.

In order to use the quantum mechanical features of light efficiently, it is necessary to operate with single photons or with highly damped laser pulses. Such laser pulses often have in average less than one photon within a pulse. At typical damping values within a glass fiber ($\alpha$ = 0,21 - 0,28 dB per km with $\alpha$ being the fiber damping in dB/km) the rate of the "surviving" photons decreases exponentially with the distance between Alice and Bob. Thus, the reachable key rate is also influenced, particularly limited, and at distances of about 50 km an efficiently usable key rate of several kBits/s is obtained. A known approximation for estimating the key rate R as a function of the distance L is given by the formula:

$$R(L) = R_0 \; 10^{\wedge} \left( -\frac{\alpha L}{10} \right)$$

wherein $R_0$ corresponds to the maximum achievable key rate, if the QKD sender and the QKD receiver are positioned back to back of each other, and $R_0$ is given, for example as 50 kBits/s.

In order to supply longer distances from end-to-end with quantum keys, so-called trusted nodes are used. The name "trusted" quantum node implies that Alice and Bob have to trust such intermediate quantum node because at each such trusted quantum node the currently secret keys are available in plain text.

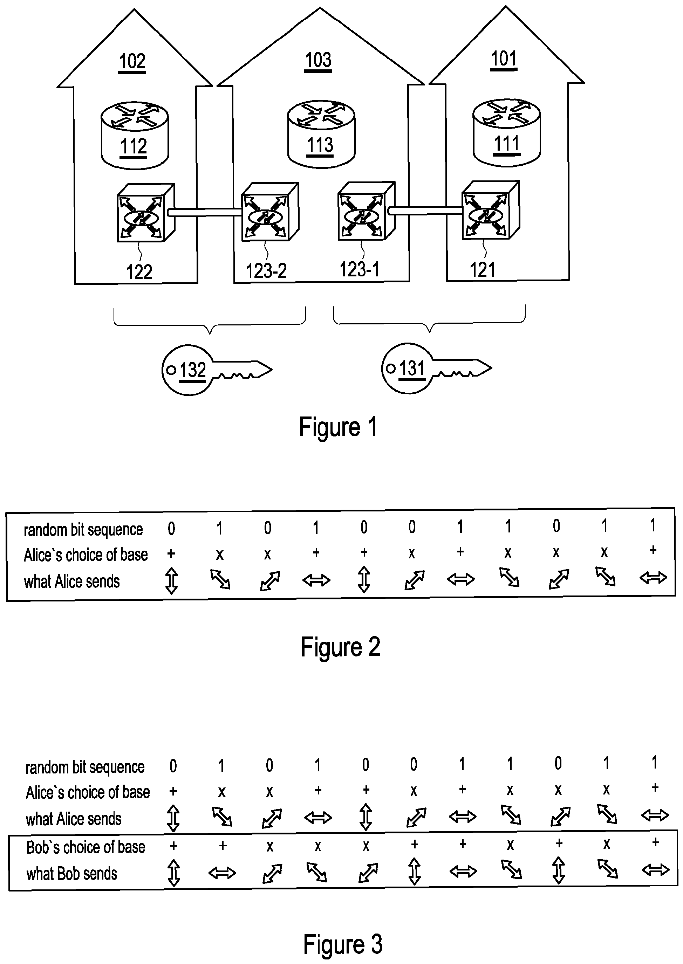

The basic principle of such single trusted quantum node is schematically shown in Figure 1 which is described below. The left and right network elements in the outer positions are assigned to the communication partners Alice (left) and Bob (right). On both sides, the middle position, i.e. the trusted node, has a separate QKD system. It does not matter here which technology is used. The trusted node, called here "Ted", is enabled to generate a secret key with Alice (left) and separately therefrom a secret key with Bob (right). The secret key with Alice is called in the following "left key" and the secret key with Bob is called "right key".

A method how an end-to-end key between Alice and Bob can be generated, operates as follows: as per agreement Ted selects one of the two keys, for example the left one with Alice and performs an XOR operation with the right key. Each single bit of the left key is compared with the corresponding bit of the right key and, therefrom, a new bit value is determined according to table 1. The result of such bit by bit manipulation is transferred from Ted to Bob. As the XOR operation is a self-inverse mapping, Bob is enabled, since he has knowledge of the right key, to reconstruct therefrom the left key in that he applies the XOR operation a second time. It could also be stated that Ted uses the right key as One-Time-Pad in order to transfer the left key in encrypted form to Bob. The right key is discarded afterwards, i. e. is not used any longer.

Table 1: bit wise XOR Operation

|  |  | Bit value of the left key | |
| --- | --- | --- | --- |
|  |  | 0 | 1 |
| Bit value of the right key | 0 | 0 | 1 |
|  | 1 | 1 | 0 |

The usage of trusted nodes is quite elegant but has the disadvantage that a huge number of overhead keys, which are needed to generate end-to-end keys, has to be provided and furthermore that the communication partners Alice and Bob are obliged to trust Ted. This might be acceptable to secure an own critical infrastructure wherein a network operator uses its own trusted nodes. However, it is excluded if a secure communication should also be offered to external users.

Therefore, it is an object of the present invention to avoid a limitation of range of the single photon technology without using trusted nodes and accepting the necessity that intermediate nodes get knowledge about the secret key.

To resolve the above-mentioned object, the present invention provides a method with the features of the independent claim 1, a quantum distribution network with the features of the independent claim 9 and an intermediate quantum node with the features of the independent claim 15. Further embodiments are described by the dependent claims and the following description.

The present invention provides a method of quantum key distribution comprising a quantum exchange step and a subsequent key agreement step, wherein in the quantum exchange step,

a. a first quantum node, in the following also called Bob, prepares a first quantum signal in one of two selectable bases and transmits the first quantum signal to a common intermediate quantum node, in the following also called Sam, over a first quantum link,

b. a second quantum node, in the following also called Alice, prepares a second quantum signal in one of the two selectable bases and transmits the second quantum signal to the common intermediate quantum node over a second quantum link,

c. the common intermediate quantum node measures simultaneously and synchronically the first quantum signal and the second quantum signal, using a system of coupled detectors, in one of the two selectable bases and gives the random selection of basis and information about whether the measurements on the two quantum signals match or not, as an event to the first quantum node and the second quantum node, respectively, over a classical authenticated channel/link, respectively,

d. steps a. to c. are repeated x times with x being an integer greater or equal than 1,

e. the first quantum node informs the second quantum node over a public classical authenticated channel/link about all events where the basis randomly selected by the intermediate quantum node coincides with the basis selected by the first quantum node to prepare the first quantum signal,

f. the second quantum node informs the first quantum node over the public classical authenticated channel/link about all events where the basis randomly selected by the intermediate quantum node, the basis selected by the first quantum node to prepare the first quantum signal and the basis selected by the second quantum node to prepare the second quantum signal coincide,

wherein, in the key agreement step, a key is generated by assigning bit values for the events according to a previously agreed assignment and using the knowledge from steps a. to f.

The respective classical authenticated channel might be any traditional communication channel at the liking of Alice and Bob and can be implemented for example as WDM channel or as LTE connection. It is not restricted except for the need to be authenticated. The term "classical" is used here to distinguish it from the quantum channel/link. The same classical authenticated channel can be used between the same two endpoints of a communication, i.e. between the first quantum node and the second quantum node, between the first quantum node and the intermediate quantum node and between the second quantum node and the intermediate quantum node. Each two pairwise disjoint parties, i.e. each pair of communication partners, such as the first and second quantum nodes, and the first quantum node and the intermediate quantum node, and the second quantum node and the intermediate quantum node, need to have their own authenticated classical channel.

As in the known concept of "trusted nodes" intermediate quantum nodes are used in a communication between Alice and Bob. However, the process and the used protocols are varied such that the intermediate quantum node at no point in time has knowledge about the bit values of the key generated and agreed between Alice and Bob and that Alice and/or Bob are informed if the intermediate quantum node disobeys the agreement.

According to one embodiment of the proposed method the key is generated equally on both sides, on the side of the first quantum node and on the side of the second quantum node.

According to a further embodiment of the proposed method each, the first quantum signal and the second quantum signal, respectively, is a single photon which is prepared in a polarisation state in the respective one of the two selectable bases. "To prepare a quantum signal" means, according to one possible embodiment of the proposed method, to choose one polarisation state of a single photon in one of the two selectable bases, i.e. to polarise the single photon into said polarisation state. Such polarised photon represents the respective quantum signal. However, a quantum signal may also be prepared in other states, not only with respect to the polarisation direction. Thus, although the proposed method will in the following be described considering the example of the polarisation states of single photons, this is not limiting for the underlying concept of the present invention and other suitable states can be used to prepare the respective quantum signals.

The measurements on the two quantum signals comprise/determine the respective polarisation state of the two quantum signals in a basis which has been chosen before.

According to the proposed method the quantum characteristics of the single photons are maintained on the partial distances between Alice and the intermediate quantum node and between Bob and the intermediate quantum node and used to generate an end-to-end key without Alice and Bob having to fully trust the intermediate quantum node. It is sufficient if the intermediate quantum node obeys to the agreed protocol, i.e. fulfils its functions/tasks as described above, and does not intentionally prevent a communication between Alice and Bob, i.e. takes over the role of "Eve". The intermediate quantum node is a kind of "semi-trusted node" and is also called "Sam" herein.

The proposed intermediate quantum node comprises an apparatus which is configured to execute quantum mechanical measurements on photons, i.e. on a pair of photons at one point in time, and to transfer the measurements results together with the respectively chosen basis (for said pair of photons) as respective event to Alice and Bob. Based thereon, Alice and Bob are enabled by means of a (common) post processing to generate a secure key. Thereby, Sam is not enabled to gain an own information advantage. Each attempt to interfere in the protocol or even the attempt of a physical interference can be detected by Alice and/or Bob.

In the scope of the present disclosure the terms "photon" and "single photon" are used synonymously. Furthermore, the terms "node" and "quantum node" are used synonymously. The same applies to the terms "polarisation" and "polarisation state". The terms "link" and "channel" are also used synonymously and designate a communication connection between two communication partners.

The proposed method is guided by the BB84 protocol as described in C. H. Bennett and G. Brassard. "Quantum cryptography: Public key distribution and coin tossing". In Proceedings of IEEE International Conference on Computers, Systems and Signal Processing, volume 175, page 8. New York, 1984. The BB84 protocol operates with discrete states in the Hilbert space of the single photons. However, the proposed method can also be performed on the basis of other suitable protocols.

In the following the key aspects of the BB84 protocol are summarized:

BB84 is a quantum key distribution scheme which is provably secure, relying on the quantum property that information gain is only possible at the expense of disturbing the signal. The idea is to encode every bit of a secret key into the polarisation state of a single photon. Because the polarization state of a single photon cannot be measured without destroying this photon, this information will be 'fragile' and not available to an attacker, called Eve. Eve will have to detect the photon, and then she will either reveal herself or will have to re-send this photon. But then she will inevitably send a photon with a wrong polarization state. This will lead to errors, and again Eve will reveal herself. It is usually explained as a method of securely communicating a private key from one party to another for example to be used in one-time pad encryption.

Alice sends polarized photons to Bob and selects for each photon, which is to be sent, randomly one of two possible bases. These bases are designated in the following "+" and "x". Each basis represents a two-dimensional vector space, such as the Hilbert space of the photons. The simplest embodiment thereof is represented by two mutually orthogonal directions which the polarisation of a photon can take in the respective basis when being prepared or measured. Each axis of a basis represents one polarisation (polarisation state) and the "x"-basis is tilted by 45° relative to the "+"-basis. After an initial calibration of the axes, Bob does measure the photons received from Alice also randomly in one of the two bases. Statistically speaking, there is a 50% hit probability for that Alice and Bob have selected for the same photon the same basis. But also in the case that Bob has selected the "wrong" basis he gets a measurement result. The result is equally distributed between the two polarisation states due to the quantum mechanical measurement process: the choice of the basis forces each photon to choose between two possibilities although it has been initially prepared in another basis.

The information about which basis has been chosen for which photon for sending or receiving, but not the measurement result itself, is exchanged between Alice and Bob via a public classical authenticated channel only after the measurement process. Those results where the bases between sender and receiver, i.e. between Alice and Bob, disaccord with each other, are rejected and/or discarded. For the same basis each measurement value is assigned a bit value "0" or "1" according to a previously agreed rule/assignment. Such rule may be agreed directly between Alice and Bob. Thus, Alice and Bob get a bit sequence of "0" and "1", the so-called "raw key".

Theoretically, the bit sequence gained by Alice and the bit sequence gained by Bob are exactly equal because if Alice prepares and sends a photon in the "x" basis with polarisation "+45°" Bob will measure, when choosing the same basis as Alice, exactly the same value. However, it is not excluded that the transfer channel has noise and/or that an attacker "Eve" listens und thus, influences the polarisation state of the photon. Therefore, methods for error correction and so-called "privacy amplification" are carried out wherein Alice and Bob exchange further information about their measurements and execute a statistical analysis. Such exchange considers, for example, information about parity of the key or statements such as "the product between the bit number 17 and the bit number 38 with me is 1" or "bit number 53 was 0" etc. If the statistical analysis shows a too large error ratio, the key candidate is rejected, and the process is repeated until a secure key is generated.

In table 2 the possible combinations of the photons polarized by Alice and the settings/adjustment of the detector of Bob are listed. The last column "hits" indicates the cases where the choices of bases of Alice and Bob are the same. In 50% of cases this is true and can be used for further executing the protocol. It is to be considered:

if the basis chosen by Alice is the same as the basis chosen by Bob, the respective values of the polarisation in this respective basis, i.e. horizontal or vertical in the "+" basis or "+45°" or "-45°" in the "x" basis, can be directly taken over as bit values 0 or 1.

Table 2

| combination | Alice's basis | Bob's basis | hit |
|---|---|---|---|
| 1 | X | X | 1 |
| 2 | X | + | |
| 3 | + | X | |
| 4 | + | + | 1 |

Such process is extended, according to the present invention, to three parties, wherein both, Alice and Bob prepare independently from each other single photons in one polarisation state and send those prepared photons to a common intermediate quantum node, called "Sam". "Sam" is a semi trusted node. At "Sam" a new system is localized which exclusively has the following task: The photons of Alice and Bob which arrive from two different directions, i.e. at one point in time one photon from Alice and one photon from Bob, are measured, by means of coupled detectors simultaneously and synchronically in one of the two bases, respectively. After each measurement process the random choice of basis and information about the fact whether the measurements for both photons were equal or not are notified as respective event to Alice and Bob, respectively.

As it is also the case with the known BB84 protocol, it is important to maintain the sequence of the different steps: first, Alice and Bob send the prepared photons to the intermediate quantum node "Sam", then Sam executes the coupled measurements and sends the results, i.e. for each pair of photons the choice of the basis ("+" or "x") and the concordance, i.e. yes or no, via a classical authenticated channel to Alice and Bob, respectively. Only after receiving these results from Sam, Alice and Bob exchange information and carry out the post processing including the above-mentioned statistical analysis. This is important as Sam gets for each measurement a valid result, which is locally independent of the detector settings and differentiates always only between "the polarisation is equal" and "the polarisation is not equal". Due to the quantum mechanical laws, each photon always chooses one of the possible directions, i.e. polarisation states even though it was prepared in another basis.

Additionally, to the hits where all bases coincide, the two last columns of table 3 indicate a partial conformity/concordance where the basis chosen by Sam only coincides with Bob's basis or with Alice's basis but not with both. That does not mean that the polarisations of the photons are measured as equal, but only that the same bases are chosen for measurement that have also been chosen by Alice and/or Bob for preparing the photons. Even if only one of the sending bases is equal to the detector settings of Sam, Sam can get a measurement result "is equal". Whether this measurement can be used for the post processing is decided only by the subsequent information exchange and comparison between Alice and Bob.

Table 3

| combination | Alice's basis | Bob's basis | Sam's basis | Base hits | Coincidence between Sam and Bob | Coincidence between Sam and Alice |
|---|---|---|---|---|---|---|
| 1 | X | X | X | 1 | 1 | 1 |
| 2 | X | X | + | | | |
| 3 | X | + | X | | | 1 |
| 4 | X | + | + | | 1 | |

(continued)

| combination | Alice's basis | Bob's basis | Sam's basis | Base hits | Coincidence between Sam and Bob | Coincidence between Sam and Alice |
|---|---|---|---|---|---|---|
| 5 | + | X | X |  | 1 |  |
| 6 | + | X | + |  |  | 1 |
| 7 | + | + | X |  |  |  |
| 8 | + | + | + | 1 | 1 | 1 |

When Sam has sent his measurement results as respective events to Alice and Bob, Alice and Bob run a consistency check by comparing the frequency of single events which have been received by each of them, respectively, as shown in table 4. Here exists a further possibility to control Sam: if Bob intentionally prefers one of the two bases, i. e. he chooses the one of the two bases more often, e.g. in a 60% to 40% ratio, such asymmetry must also arise in the measurement results of Sam.

Table 4

| event | Sam's basis | Coincidence between photons from Alice and Bob |
|---|---|---|
| 1 | X | yes |
| 2 | X | no |
| 3 | + | yes |
| 4 | + | no |

However, in the following, a symmetric choice of bases is considered:
After the publication of the events to Alice and Bob by Sam, Bob informs Alice by the aid of sequence numbers of the photons via a classical public and authenticated channel about all events where the bases chosen by Sam coincide with the bases chosen by Bob. These are in the example of table 3 the combinations 1, 4, 5, 8 in table 3. However, Bob is silent about the respective polarisation states of the photons, i.e. he only confirms the choice of the bases.
Alice has now the possibility to carry out a conformity check as the symmetric choice of bases must also be reflected by the subset resulting from Bobs indications. If Bob has chosen an asymmetric choice of bases, he only has to tell Alice the ratio, so that Alice can verify the such generated frequencies in Sam's indications.
In a further step Alice sends her choice of bases to Bob, i.e. in the example of table 3 the combinations 1, 3, 6, 8 in table 3. It is sufficient to inform Bob about those events and sequence numbers where Alice's choice of bases coincides with Bob's choice as well as with Sam's choice, i.e. combinations 1 and 8 in table 3.
According to one embodiment of the proposed method, the knowledge from steps a. to f. comprises the respective polarisation state of the first quantum signals, the respective polarisation state of the second quantum signals, those events where the basis randomly selected by the intermediate quantum node, the basis selected by the first quantum node to prepare the first quantum signal and the basis selected by the second quantum node to prepare the second quantum signal coincide and where the polarisation states of the first and second quantum signals match or not.
That means that at this point in time, the following information is available:

- Alice knows the polarisation states of the photons which have been prepared by herself.
- Bob knows the polarisation states of the photons which have been prepared by himself.
- Alice, Bob and Sam know for which events all three bases coincide (nothing preclude a potential attacker at the localisation of Sam from listening and evaluating the public exchange of information between Alice and Bob).
- Alice, Bob and Sam know whether the respective polarisation of the photons for each pair of photons, one received from Alice and one received from Bob, coincide or not.

It is possible that an event is assigned to a bit value "1" where the polarisation state of the first quantum signal and the polarisation state of the second quantum signal coincide and also the basis randomly selected by the intermediate quantum node, the basis selected by the first quantum node to prepare the first quantum signal and the basis selected by the second quantum node to prepare the second quantum signal coincide.
That means that in the subsequent post processing bit values are assigned to events according to a pre-agreed assignment rule. Such assignment rule can be agreed between Alice and Bob. Alice and Bob can, for example, set 1 whenever the polarisation in the "+" basis coincide and both photons are either horizontal or vertical prepared. In the case that both sending bases and the measurement base used by Sam coincide but Sam indicates a non-conformity, than Alice and Bob know that their photons are in states which are orthogonal to each other and assign a bit value "0" to such an event.

Contrary to the known BB84 the assignment of bit values is not compulsory performed according to the convention that the polarisation coincides in the same basis or not as in the cases 1 and 4 in table 2. However, the exact specification is not essential for an execution of the proposed method - an asymmetrical distribution of the bit values 0 and 1 can also be generated or an assignment is defined which nullifies a from the outset asymmetrical distribution of sent photons and/or bases. After the post processing Alice and Bob get a raw key as with the BB84 protocol and can execute therewith in similar manner the steps of the above-mentioned privacy amplification.

Thereby, the first quantum node and the second quantum node exchange further information about the generated key and perform statistical analysis wherein the exchange concerns particularly parity information about the key.

If the statistical analysis shows an error ratio which exceeds a pre-given threshold, the first quantum node and the second quantum node discard the generated key and start generating all over again until a secure key is generated.

The present invention is further directed to a quantum distribution network comprising a first quantum node, a second quantum node and an intermediate quantum node wherein the intermediate quantum node is linked in series via at least a first quantum link and a second quantum link with the first quantum node and the second quantum node, respectively, wherein the first quantum node is configured to prepare a first quantum signal in one of two selectable bases and the second quantum node is configured to prepare a second quantum signal in one of the two selectable bases wherein the first quantum node and the second quantum node have at least a quantum transmitter/sender, respectively, and the intermediate quantum node has at least a quantum receiver arranged to receive the first quantum signal and the second quantum signal from the adjacent first and second quantum nodes, respectively, in a quantum exchange step, the intermediate quantum node being configured to measure by means of coupled detectors a respective quantum state of the first quantum signal and the second quantum signal, respectively, in one of the bases and to give the random selection of basis and information about whether the measurements on the two quantum signals match or not, as an event to the first quantum node and the second quantum node, respectively, via a communication unit for communicating information regarding the received quantum signals with a communication unit at the first and second quantum nodes, respectively, and the first and second quantum nodes are arranged to agree, in a key agreement step, a key with each other by assigning bit values for the events communicated by the intermediate quantum node the bit values being assigned according to a previously agreed assignment and using knowledge from information directly exchanged between the first and second quantum nodes.

That means that both, the first and the second quantum nodes comprise communication units, respectively, for communicating information regarding the events received from the intermediate quantum node with the respective communication unit of the respective other quantum node.

The intermediate quantum node is configured to measure simultaneously and synchronically the first quantum signal and the second quantum signal using a system of coupled detectors in one of the two selectable bases and to give the random selection of basis and information about whether the measurements on the two quantum signals match or not, as an event to the first quantum node and the second quantum node, respectively, over a classical authenticated link, respectively.

Furthermore, the intermediate quantum node is configured to only select the basis in which the quantum signals from the first quantum node and the second quantum node which are received by the intermediate quantum node at one point in time, are to be measured, respectively, and to output a result of the measurements whether the quantum signals arriving from the first quantum node and from the second quantum node had the same or different polarisation state and to send the result directly in a return channel to both the first quantum node and the second quantum node, respectively.

According to one embodiment of the proposed network, the intermediate quantum node comprises a respective polarizer for both the first quantum signal of the first quantum node and the second quantum signal of the second quantum node, the polarizers being coupled together so that they always take a same direction or an opposite direction.

Thereby, the intermediate quantum node comprises a coincidence detector located behind the polarizers and configured to measure whether the first quantum signal received from the first quantum node at one point in time and the second quantum signal received from the second quantum node at the one point in time had the same state of polarisation or were orthogonal to each other wherein the coincidence detector consists internally of several individual detectors whose measurement results are logically combined. It might be possible to use two detectors, at both ends of the measurement, one towards Alice, the other towards Bob. "Logical combined" means the evaluation of the results of the two detectors, one towards Alice, the other towards Bob.

According to a further embodiment of the proposed network, the network comprises an optical control link which is configured to be fed by the first quantum node and the second quantum node with a respective continuous wave laser, respectively, the respective wave laser having a monitoring wavelength and low intensity, respectively, at a sufficient distance from a respective frequency of the first quantum signal and the second quantum signal, respectively.

Thereby, the optical control link is configured such that immediately before the apparatus of the intermediate quantum node for determining at one point in time the respective polarization of the first quantum signal and the second quantum signal for a current coincidence measurement, the monitoring wavelength of the first quantum node is decoupled from the first quantum link and fed into the second quantum link inside the intermediate quantum node against an original transmission direction of the second quantum signal and analogously the monitoring wavelength of the second quantum node is decoupled from the second quantum link and fed into the first quantum link inside the intermediate quantum node against an original transmission direction for the first quantum signal wherein the monitoring wavelength of the first quantum node and the monitoring wavelength of the second quantum node differ from each other.

The present disclosure also refers to a computer program product comprising a set of instructions which, when executed on at least one computing device, is configured to cause the at least one computing device to carry out at least one embodiment of the method as described before.

The computer program product may be embodied as a computer-readable medium or directly loaded into a computer, i.e. into the at least one computing device.

Embodiments of the invention may be used with or incorporated in a computer system that may be a standalone unit or include one or more remote terminals or devices in communication with a central computer, located, for example, in a cloud, via a network such as, for example, the Internet or an intranet. As such, the network elements described herein and related components may be a portion of a local computer system or a remote computer or an online system or a combination thereof. Software, such as the protocol described herein may be stored in computer internal memory or in a non-transitory computer readable medium.

The present disclosure also refers to an intermediate quantum node as a component of the claimed network described above.

Further aspects of the invention will be realized and attained by means of the elements and combinations particularly depicted in the appended claims. It is to be understood that both, the foregoing general description and the following detailed description are exemplary and explanatory only and are not restrictive of the invention as described. The figures are described in a cross-figure manner, identical reference signs indicate identical components.

**Brief description of the drawings**

Figure 1 shows schematically the principle of operation of a trusted node according to the state of the art.

Figure 2 shows a table indicating a first step according to the BB84 protocol.

Figure 3 shows a table indicating a second step according to the BB84 protocol.

Figure 4 shows a table indicating a third step according to the BB84 protocol.

Figure 5 shows schematically an intermediate quantum node as part of an embodiment of the proposed network and/or as used in an embodiment of the proposed method.

Figure 6 shows schematically an interior view of the intermediate quantum node of Figure 5.

Figure 7 shows schematically the principle of operation of the intermediate quantum node as semi trusted node according to an embodiment of the proposed method.

Figure 8 shows schematically further details of the intermediate quantum node as part of an embodiment of the proposed network and/or as used in an embodiment of the proposed method.

Figure 1 shows schematically the basic principle of a single trusted quantum node as known from the prior art. The network elements 111, 112 in the outer positions 101, 102 are assigned to the communication partners Bob (right) and Alice (left). On both sides, the middle position 103 (with the network element 113) has a separate QKD system 123-1, 123-2. Alice 102 has also a QKD system 122 which is configured to generate and agree a key 132 with the middle position 103. Bob 101 also has a QKD system 121 which is configured to generate and agree a key 131 with the middle position 103, i.e. with the trusted node 103. It does not matter here which technology is used. The trusted node 103, called here "Ted", is enabled to generate the secret key 132 with Alice 102 by means of its QKD system 123-2 which interworks with the QKD system 122 of Alice 102 and separately therefrom the secret key 131 with Bob 101 by means of its QKD system 123-1 which interworks with the QKD system 121 of Bob 101. The secret key 132 with Alice 102 is called in table 1 "left key" and the secret key 131 with Bob 101 is called "right key".

A method how an end-to-end key between Alice 102 and Bob 101 can be generated, operates as follows: as per agreement Ted 103 selects one of the two keys 131, 132, for example the left one 132 with Alice 102 and performs an XOR operation with the right key 131 from Bob 101. Each single bit of the left key 132 is compared with the corresponding bit of the right key 131 and, therefrom, a new bit value is determined according to table 1. The result of such bit by bit manipulation is transferred from Ted 103 to Bob 101. As the XOR operation is a self-inverse mapping, Bob 101 is enabled, since he has knowledge of the right key 131, to reconstruct therefrom the left key 132, in that he applies the XOR operation a second time. It could also be stated that Ted 103 uses the right key 131 as One-Time-Pad in order to transfer the left key 132 in encrypted form to Bob 101. The right key 131 is discarded afterwards, i.e. is not used any longer.

Table 1: Bitwise XOR Operation

| | | Bit value of the left key | |
| --- | --- | --- | --- |
| | | 0 | 1 |
| Bit value of the right key | 0 | 0 | 1 |
| | 1 | 1 | 0 |

Figure 2 shows a table indicating a first step according to the BB84 protocol. Alice 102 sends polarized photons to Bob 101 and selects for each photon, which is to be sent, randomly one of two possible bases. These bases are designated in the following "+" and "x". Each basis represents a two-dimensional vector space, such as the Hilbert space of the photons. The simplest embodiment thereof is represented by two mutually orthogonal directions which the polarisation of a photon can take when being prepared or measured. Each axis of a basis represents one polarisation and the "x"-basis is tilted by 45° relative to the "+"-basis. Furthermore, Alice 102 randomly selects a respective basis for each of the also random bit values. Thus, each pair of basis and polarized photon, i. e. polarisation state, is assigned a specific bit value such that each polarized photon is assigned unambiguously one bit value of the two possible bit values 1 and 0.

After an initial calibration of the axes, Bob 101, as illustrated in Figure 3, does measure the photons received from Alice 102 also randomly in one of the two bases. Statistically speaking, there is a 50% hit probability for that Alice 102 and Bob 101 have selected for the same photon the same basis. But also in the case that Bob 101 has selected the "wrong" basis Bob 101 gets a measurement result. The result is equally distributed between the two polarisation states due to the quantum mechanical measurement process: the choice of the basis forces each photon to choose between two possibilities although it has been initially prepared in another polarisation state.

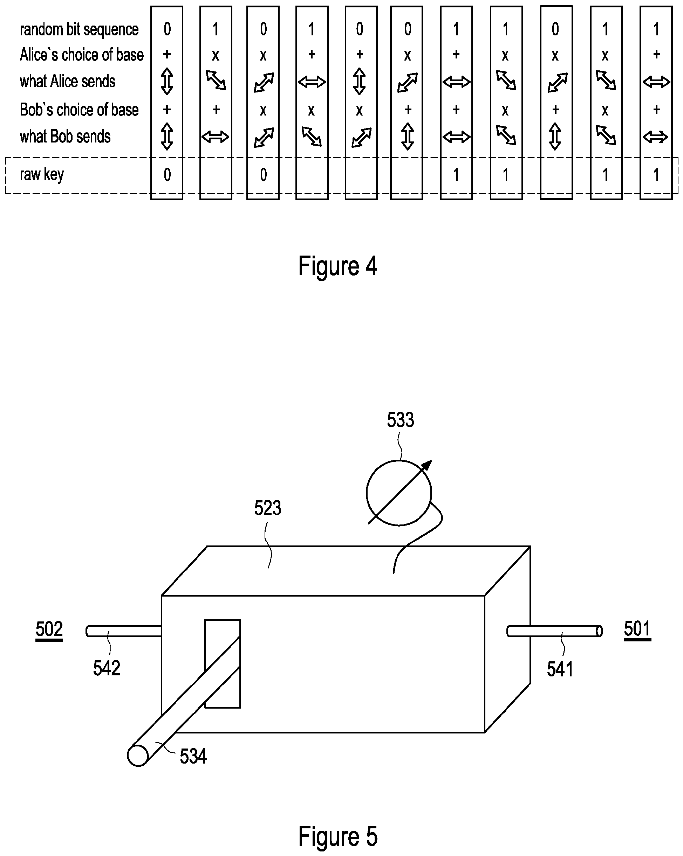

The information about which basis has been chosen for which photon for sending or receiving, but not the measurement result itself, is exchanged as indicated in Figure 4, between Alice 102 and Bob 101 via a public classical authenticated channel only after the measurement process. Those results where the bases between sender and receiver, i.e. between Alice 102 and Bob 101, disaccord with each other, are rejected and/or discarded. For the same basis each measurement value is assigned a bit value "0" or "1" according to a previously agreed rule. Such rule may be agreed directly between Alice 102 and Bob 101. Thus, Alice 102 and Bob 101 get a bit sequence of "0" and "1", the so-called "raw key" as indicated in the last line. In Figure 4 the agreed rule corresponds to the random assignment rule Alice 102 has chosen in order to assign a respective basis to a bit value "0" or "1". Alice 102 has to inform Bob 101 about this assignment rule via the classical authenticated channel.

Theoretically, the bit sequence gained by Alice 102 and the bit sequence gained by Bob 101 are exactly equal because if Alice 102 prepares and sends a photon in the "x" basis with polarisation "+45°" Bob 101 will measure, when choosing the same basis as Alice 102, exactly the same value. However, it is not excluded that the transfer channel has noise and/or that an attacker "Eve" listens und thus, influences the polarisation state of the photon. Therefore, methods for error correction and so-called "privacy amplification" are carried out wherein Alice 102 and Bob 101 exchange further information about their measurements and execute a statistical analysis.

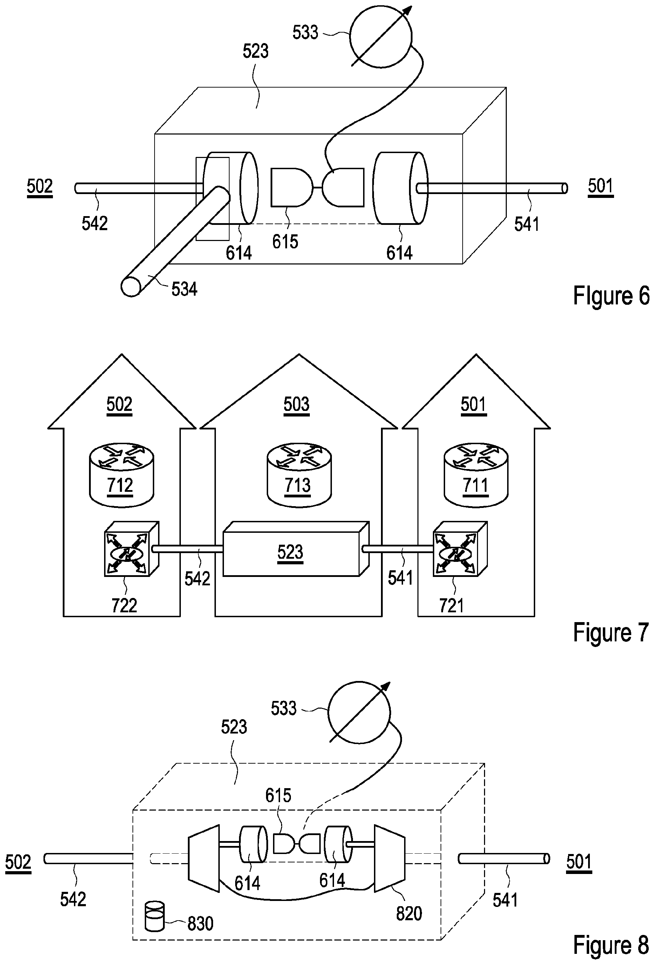

For the proposed intermediate quantum node Sam to work according to an embodiment of the claimed method, an apparatus 523 is provided as shown in Figure 5. The apparatus 523 is configured such that due to construction Sam 503 at the middle position between Alice 502 and Bob 501 (see Figure 7) only gets to know whether the polarisations of the photons received from Alice 502 and Bob 501, respectively, coincide without getting knowledge about the absolute values of polarisation of the respective photons. Such black box 523 as component of Sam 503 has, accessible from the outside, only the possibility to select the basis in which a current measurement is to be carried out by means of a setting device 534 and to output via an output unit 533 the respective measurement result whether the photons received from Alice and Bob, respectively, have the same or different polarisation. It is useful to send the displayed values directly via a respective feedback channel to both Alice 502 and Bob 501. A local display is not inevitably necessary. The respective feedback channel may be a public classical, authenticated channel.

Figure 6 shows a detailed view of the inside of the black box 523. For both directions, i.e. the direction from Alice 502 as indicated by a fiber 542 entering the black box 523 on the left side and the direction from Bob 501 as indicated by a fiber 541 entering the black box 523 on the right side, there are respective polarisators 614 which are coupled with each other such that they always take the same or the opposite direction. Behind the polarisators 614 there is a coincidence detector 615 which is configured to measure whether both photons, which are received from Alice 502 and Bob 501 at one point in time, have the same polarisation state or are orthogonal with respect to each other. The coincidence detector 615 comprises internally a plurality of single detectors whose measurement results are logically fused in a suitable manner.

Summarized it is to be stated that a scenario as shown in Figure 7 is obtained. The left and right network elements 712, 711 in the outer positions 502, 501 are assigned to the communication partners Alice (left) and Bob (right). The middle position 503 (with the network element 713) has a QKD system 523 as described, for example, in Figures 5 and 6. Alice 502 has a QKD system 722 which is configured to prepare single photons, i.e. to choose a basis from at least two bases and to polarize the photons in said chosen basis, and to send the prepared photons to the middle position 503. Bob 502 also has a QKD system 721 which is configured to prepare single photons as described above and to send the prepared photons to the middle position 503, i.e. to the semi trusted node 503. The semi trusted node 503, called here "Sam", is enabled to receive the photons from Alice 502 and the photons from Bob 501 by means of its QKD system 523. The apparatus 523 is configured such that due to construction Sam 503 at the middle position between Alice 502 and Bob 501 only gets to know whether the polarisations of the photons received from Alice 502 and Bob 502, respectively, at one point in time coincide without getting knowledge about the absolute values of polarisation of the respective photons. The apparatus 523 is configured to measure the polarisation of the received photons and to compare the polarisations of the photons of a pair of photons which has been received at one point in time wherein one photon of the pair of photons is received from Alice 502 at the one point in time and the second photon of the pair of photons is received from Bob 501 at (substantially) the same point in time. It is useful to send the displayed values directly via a feedback channel, i.e. a classical authenticated channel to both Alice 502 and Bob 501.

If the distances between Alice 502 and the intermediate quantum node 503 and between Bob 501 and the intermediate quantum node 503 are similar to those distances as shown in Figure 1 with the only difference that the intermediate quantum node 503 is no longer a trusted node, but a semi trusted node, it can be recognized that due to the usage of such semi trusted node the range of original QKD keys can be doubled. "Original" QKD keys means keys which are not derived from basic keys via an XOR operation. The photons which have only been discarded in the course of the evaluation can be used to validate the semi trusted node Sam 503. Further, according to the following formula, the sum of ratios, which are proportional to the surviving photons, of two partial distances $L_a$ and $L_b$ are always greater than the ratio of the sum of the partial distances $L_a + L_b$:

$$10^{-\alpha\frac{L_a}{10}} + 10^{-\alpha\frac{L_b}{10}} \gg 10^{-\alpha\frac{L_a+L_b}{10}}$$

(here shortened by the factor $R_0$)

Therefrom it can be seen that it is always better to go a plurality of short distances instead of a long one.

As in the scenario in Figure 1 an attacker Eve could get access to the intermediate quantum node Sam 503 and exchange or manipulate the above-mentioned black box 523 in order to get knowledge about the generated key. Therefore, it would be necessary that Eve herself measures the polarisation of the photons and pretends to be Sam 503 to Alice 502 and Bob 501. In order to do this, Eve must remove both fibers 541, 542 from the black box 503 which can be controlled by means of an optical control channel 820 as shown in Figure 8.

Alice 502 and Bob 501 inject a continuous wave laser, respectively, with low intensity into the fibers 542, 541, the continuous wave laser being in sufficient distance to the frequency of the single photon frequency, i.e. the frequency with which Alice and Bob send polarized photons to Sam, respectively. Directly before the system, i.e. the polarisators 614 and the coincidence detector 615, to determine the polarisation for the current coincidence measurement such continuous wave laser is decoupled from Alice's fiber 542 and within the black box 523 opposite to the original sending direction injected into Bob's fiber 541. The same is performed for Bob's continuous wave laser to Alice. Thereby, it might be useful that the wavelength of Alice's wave laser and the wavelength of Bob's wave laser are different from each other.

It is also possible that the bidirectional connection between Alice 502 and Bob 501 through the black box 523 is modulated and also used for the intrinsic communication. The data rates used for the post processing are in the low kbit range and can be exchanged reliably between Alice 502 and Bob 501 with low intensities because the limiting factor for the range are the single photons of the quantum channels. Furthermore, Alice 502 and Bob 501 can use parts of their currently generated key after an initial common shared secret ("pre-shared secret") in order to authenticate the classical communication via exactly that bidirectional connection. Due to the fiber control 820 each manipulation at the fibers 542, 541 within the black box 523 can be measured. There is still the possibility that Eve attacks the fibers 542, 541 directly at or outside from the black box 523 and achieves to get control about the fibers 542, 541, but in that case, it would be necessary that Eve has physical access to Sam 503. Such physical access is sufficiently prevented due to known existing control mechanisms.

Furthermore, there is still the possibility that Sam 503 himself takes the role of Eve. Usual known safety precautions will help, such as so-called anti-tampering devices 830. Each attempt to open the black box 523 or to gain unauthorised access to the internal mechanics of the black box 523 automatically release a mechanism which prevents a further usage of the black box 523 or an information gain, such mechanism being a kind of self-destruct button.

Furthermore, there is still the possibility that a potentially malicious Sam 503 can destroy each black box 523 and thus perform a denial of service. But as there exist easier methods to physically destroy any communication units necessary for communication, it is assumed in the present disclosure that all parties, i.e. Alice 502, Bob 501 and Sam 503 cooperate and that Sam 503 has an interest that the communication between Alice 502 and Bob 501 is undisturbed.

**List of reference signs**

| 101 | Bob (right outer position) |
| 102 | Alice (left outer position) |
| 103 | Ted (middle position) |
| 111 | network element |
| 112 | network element |
| 113 | network element |
| 121 | QKD system |
| 122 | QKD system |
| 123-1 | QKD system |
| 123-2 | QKD system |
| 131 | key with Bob |
| 132 | key with Alice |

| 501 | Bob |
| 502 | Alice |
| 503 | Sam |
| 523 | apparatus |
| 533 | output unit |
| 534 | setting device |
| 541 | fiber |
| 542 | fiber |

| 614 | polarisators |
| 615 | coincidence detector |
| 711 | network element |
| 712 | network element |

**Claims**

1.  A method of quantum key distribution comprising a quantum exchange step and a subsequent key agreement step, wherein in the quantum exchange step,

    a. a first quantum node (501) prepares a first quantum signal in one of two selectable bases and transmits the first quantum signal to a common intermediate node (503) over a first quantum link (541),

    b. a second quantum node (502) prepares a second quantum signal in one of the two selectable bases and transmits the second quantum signal to the common intermediate node (503) over a second quantum link (542),

    c. the common intermediate quantum node (503) measures simultaneously and synchronically the first quantum signal and the second quantum signal using a system of coupled detectors in one of the two selectable bases and gives the random selection of basis and information about whether the measurements on the two quantum signals match or not, as an event to the first quantum node (501) and the second quantum node (502), respectively, over a classical link, respectively,

d. steps a. to c. are repeated x times with x being greater or equal than 1,

e. the first quantum node (501) informs the second quantum node (502) over a classical authenticated link about all events where the basis randomly selected by the intermediate quantum node (503) coincides with the basis selected by the first quantum node (501) to prepare the first quantum signal,

f. the second quantum node (502) informs the first quantum node (501) over the classical authenticated link about all events where the basis randomly selected by the intermediate quantum node (503), the basis selected by the first quantum node (501) to prepare the first quantum signal and the basis selected by the second quantum node (502) to prepare the second quantum signal coincide,

wherein, in the key agreement step, a key is generated by assigning bit values for the events according to a previously agreed assignment and using the knowledge from steps a. to f.

2. The method according to claim 1 wherein the key is generated equally on both sides, on the side of the first quantum node (501) and on the side of the second quantum node (502).

3. The method according to claim 1 or 2 wherein each, the first quantum signal and the second quantum signal, respectively, is a single photon which is prepared in a polarisation state in the respective one of the two selectable bases.

4. The method according to claim 3 wherein the measurements on the two quantum signals comprise the respective polarisation state of the two quantum signals.

5. The method according to claim 4 wherein the knowledge from steps a. to f. comprises the respective polarisation state of the first quantum signals, the respective polarisation state of the second quantum signals, those events where the basis randomly selected by the intermediate quantum node (503), the basis selected by the first quantum node (501) to prepare the first quantum signal and the basis selected by the second quantum node (502) to prepare the second quantum signal coincide and where the polarisation states of the first quantum signal and the second quantum signals match or not.

6. The method according to claim 5 wherein an event is assigned to a bit value "1" where the polarisation state of the first quantum signal and the polarisation state of the second quantum signal coincide as well as the basis randomly selected by the intermediate quantum node (503), the basis selected by the first quantum node (501) to prepare the first quantum signal and the basis selected by the second quantum node (502) to prepare the second quantum signal coincide.

7. The method according to any one of the claims 2 to 6 wherein the first quantum node (501) and the second quantum node (502) exchange further information about the generated key and perform statistical analysis wherein the exchange concerns particularly parity information about the key.

8. The method according to claim 7 wherein if the statistical analysis shows an error ratio which exceeds a pre-given threshold, the first quantum node (501) and the second quantum node (502) discard the generated key and start generating all over again until a secure key is generated.

9. A quantum distribution network comprising a first quantum node (501), a second quantum node (502) and an intermediate quantum node (503) wherein

- the intermediate quantum node (503) is linked in series via at least a first quantum link (541) with the first quantum node (501) and a second quantum link (542) with the second quantum node (502),
- the first quantum node (501) is configured to prepare a first quantum signal in one of two selectable bases and the second quantum node (502) is configured to prepare a second quantum signal in one of the two selectable bases wherein the first quantum node (501) and the second quantum node (502) have at least a quantum transmitter/sender, respectively, and
- the intermediate quantum node (503) has at least a quantum receiver arranged to receive the first quantum signal and the second quantum signal from the adjacent first quantum node (501) and second quantum node (502), respectively, in a quantum exchange step, the intermediate quantum node (503) being configured to measure by means of coupled detectors a respective quantum state of the first quantum signal and the second quantum signal, respectively, in one of the two selectable bases and to give the random selection of basis and information about whether the measurements on the two quantum signals match or not, as an event to the first quantum node (501) and the second quantum node (502), respectively, via a communication unit for communicating information regarding the received quantum signals via a classical authenticated link with a communication unit at the first quantum node (501) and the second quantum node (502), respectively, and
- the first quantum node (501) and the second quantum node (502) are arranged to agree, in a key agreement step, a key with each other by assigning bit values for the events communicated by the intermediate quantum node (503) the bit values being assigned according to a previously agreed assignment rule and using knowledge from information directly exchanged between the first quantum node (501) and the second quantum node (502).

10. The quantum distribution network according to claim 9 wherein the intermediate quantum node (503) is configured to only select the basis in which the received quantum signals from the first quantum node (501) and the second quantum node (502) are to be measured, respectively, and to output a result of the measurements whether the quantum signals arriving from the first quantum node (501) and from the second quantum node (502) had the same or different polarisation state and to send the result directly over the classical authenticated link to both the first quantum node (501) and the second quantum node (502), respectively.

11. The quantum distribution network according to any one of claims 9 to 10 wherein the intermediate quantum node (503) comprises a respective polarizer for both the first quantum signal of the first quantum node (501) and the second quantum signal of the second quantum node (502), the polarizers being coupled together so that they always take a same or an opposite direction.

12. The quantum distribution network according to claim 11 wherein the intermediate quantum node (503) comprises a coincidence detector located behind the polarizers and configured to measure whether the first quantum signal received from the first quantum node (501) and the second quantum signal received from the second quantum node (502) had the same state of polarisation or were orthogonal to each other wherein the coincidence detector consists internally of several individual detectors.

13. The quantum distribution network according to any one of claims 9 to 12 further comprising an optical control link (820) which is configured to be fed by the first quantum node (501) and the second quantum node (502) with a respective continuous wave laser, respectively, the respective wave laser having a monitoring wavelength and low intensity, respectively, at a sufficient distance from a respective frequency of the first quantum signal and the second quantum signal, respectively.

14. The quantum distribution network according to claim 13 wherein the optical control link (820) is configured such that immediately before the intermediate quantum node (503) determining the respective polarization of the first quantum signal and the second quantum signal for a current coincidence measurement, the monitoring wavelength of the first quantum node (501) is decoupled from the first quantum link (541) and fed into the second quantum link (542) inside the intermediate quantum node (503) against an original transmission direction and analogously the monitoring wavelength of the second quantum node (502) is decoupled from the second quantum link (542) and fed into the first quantum link (541) inside the intermediate quantum node (503) against an original transmission direction wherein the monitoring wavelength of the first quantum node (501) and the monitoring wavelength of the second quantum node (502) differ from each other.

15. An intermediate quantum node as a component of the network according to any one of claims 9 to 14.

Amended claims in accordance with Rule 137(2) EPC.

1. A method of quantum key distribution comprising a quantum exchange step and a subsequent key agreement step, wherein in the quantum exchange step,

a. a first quantum node (501) prepares a first quantum signal in one of two selectable bases and transmits the first quantum signal to a common intermediate node (503) over a first quantum link (541),
b. a second quantum node (502) prepares a second quantum signal in one of the two selectable bases and transmits the second quantum signal to the common intermediate node (503) over a second quantum link (542),
c. the common intermediate quantum node (503) measures simultaneously and synchronically the first quantum signal and the second quantum signal using a system of coupled detectors in one of the two selectable bases and gives the random selection of basis and information about whether the measurements on the two quantum signals match or not, as an event to the first quantum node (501) and the second quantum node (502), respectively, over a classical link, respectively,

d. steps a. to c. are repeated x times with x being greater or equal than 1,

e. the first quantum node (501) informs the second quantum node (502) over a classical authenticated link about all events where the basis randomly selected by the intermediate quantum node (503) coincides with the basis selected by the first quantum node (501) to prepare the first quantum signal,

f. the second quantum node (502) informs the first quantum node (501) over the classical authenticated link about all events where the basis randomly selected by the intermediate quantum node (503), the basis selected by the first quantum node (501) to prepare the first quantum signal and the basis selected by the second quantum node (502) to prepare the second quantum signal coincide,

wherein, in the key agreement step, a key is generated by assigning bit values for the events according to a previously agreed assignment and using the knowledge from steps a. to f, **characterized in that** the intermediate quantum node (503) is further controlled **in that** the second quantum node (502) intentionally chooses one of the two selectable bases more often according to a specific ratio and it is checked whether such asymmetry arises in the measurements of the intermediate node (503).

2. The method according to claim 1 wherein the key is generated equally on both sides, on the side of the first quantum node (501) and on the side of the second quantum node (502).

3. The method according to claim 1 or 2 wherein each, the first quantum signal and the second quantum signal, respectively, is a single photon which is prepared in a polarisation state in the respective one of the two selectable bases.

4. The method according to claim 3 wherein the measurements on the two quantum signals comprise the respective polarisation state of the two quantum signals.

5. The method according to claim 4 wherein the knowledge from steps a. to f. comprises the respective polarisation state of the first quantum signals, the respective polarisation state of the second quantum signals, those events where the basis randomly selected by the intermediate quantum node (503), the basis selected by the first quantum node (501) to prepare the first quantum signal and the basis selected by the second quantum node (502) to prepare the second quantum signal coincide and where the polarisation states of the first quantum signal and the second quantum signals match or not.

6. The method according to claim 5 wherein an event is assigned to a bit value "1" where the polarisation state of the first quantum signal and the polarisation state of the second quantum signal coincide as well as the basis randomly selected by the intermediate quantum node (503), the basis selected by the first quantum node (501) to prepare the first quantum signal and the basis selected by the second quantum node (502) to prepare the second quantum signal coincide.

7. The method according to any one of the claims 2 to 6 wherein the first quantum node (501) and the second quantum node (502) exchange further information about the generated key and perform statistical analysis wherein the exchange concerns particularly parity information about the key.

8. The method according to claim 7 wherein if the statistical analysis shows an error ratio which exceeds a pre-given threshold, the first quantum node (501) and the second quantum node (502) discard the generated key and start generating all over again until a secure key is generated.

9. A quantum distribution network comprising a first quantum node (501), a second quantum node (502) and an intermediate quantum node (503) wherein

- the intermediate quantum node (503) is linked in series via at least a first quantum link (541) with the first quantum node (501) and a second quantum link (542) with the second quantum node (502),
- the first quantum node (501) is configured to prepare a first quantum signal in one of two selectable bases and the second quantum node (502) is configured to prepare a second quantum signal in one of the two selectable bases wherein the first quantum node (501) and the second quantum node (502) have at least a quantum transmitter/sender, respectively, and

- the intermediate quantum node (503) has at least a quantum receiver arranged to receive the first quantum signal and the second quantum signal from the adjacent first quantum node (501) and second quantum node (502), respectively, in a quantum exchange step, the intermediate quantum node (503) being configured to measure by means of coupled detectors a respective quantum state of the first quantum signal and the second quantum signal, respectively, in one of the two selectable bases and to give the random selection of basis and information about whether the measurements on the two quantum signals match or not, as an event to the first quantum node (501) and the second quantum node (502), respectively, via a communication unit for communicating information regarding the received quantum signals via a classical authenticated link with a communication unit at the first quantum node (501) and the second quantum node (502), respectively, and

- the first quantum node (501) and the second quantum node (502) are arranged to agree, in a key agreement step, a key with each other by assigning bit values for the events communicated by the intermediate quantum node (503) the bit values being assigned according to a previously agreed assignment rule and using knowledge from information directly exchanged between the first quantum node (501) and the second quantum node (502), **characterized by** a further possibility to control the intermediate node (503) in that the second quantum node (502) intentionally chooses one of the two selectable bases more often according to a specific ratio and it is checked whether such asymmetry arises in the measurements of the intermediate node (503).

10. The quantum distribution network according to claim 9 wherein the intermediate quantum node (503) is configured to only select the basis in which the received quantum signals from the first quantum node (501) and the second quantum node (502) are to be measured, respectively, and to output a result of the measurements whether the quantum signals arriving from the first quantum node (501) and from the second quantum node (502) had the same or different polarisation state and to send the result directly over the classical authenticated link to both the first quantum node (501) and the second quantum node (502), respectively.

11. The quantum distribution network according to any one of claims 9 to 10 wherein the intermediate quantum node (503) comprises a respective polarizer for both the first quantum signal of the first quantum node (501) and the second quantum signal of the second quantum node (502), the polarizers being coupled together so that they always take a same or an opposite direction.

12. The quantum distribution network according to claim 11 wherein the intermediate quantum node (503) comprises a coincidence detector located behind the polarizers and configured to measure whether the first quantum signal received from the first quantum node (501) and the second quantum signal received from the second quantum node (502) had the same state of polarisation or were orthogonal to each other wherein the coincidence detector consists internally of several individual detectors.

13. The quantum distribution network according to any one of claims 9 to 12 further comprising an optical control link (820) which is configured to be fed by the first quantum node (501) and the second quantum node (502) with a respective continuous wave laser, respectively, the respective wave laser having a monitoring wavelength and low intensity, respectively, at a sufficient distance from a respective frequency of the first quantum signal and the second quantum signal, respectively.

14. The quantum distribution network according to claim 13 wherein the optical control link (820) is configured such that immediately before the intermediate quantum node (503) determining the respective polarization of the first quantum signal and the second quantum signal for a current coincidence measurement, the monitoring wavelength of the first quantum node (501) is decoupled from the first quantum link (541) and fed into the second quantum link (542) inside the intermediate quantum node (503) against an original transmission direction and analogously the monitoring wavelength of the second quantum node (502) is decoupled from the second quantum link (542) and fed into the first quantum link (541) inside the intermediate quantum node (503) against an original transmission direction wherein the monitoring wavelength of the first quantum node (501) and the monitoring wavelength of the second quantum node (502) differ from each other.

15. An intermediate quantum node as a component of the network according to any one of claims 9 to 12.

Figure 1

| random bit sequence | 0 | 1 | 0 | 1 | 0 | 0 | 1 | 1 | 0 | 1 | 1 |
|---|---|---|---|---|---|---|---|---|---|---|---|
| Alice's choice of base | + | x | x | + | + | x | + | x | x | x | + |
| what Alice sends | ↕ | ⤡ | ⤢ | ↔ | ↕ | ⤢ | ↔ | ⤡ | ⤢ | ⤡ | ↔ |

Figure 2

| random bit sequence | 0 | 1 | 0 | 1 | 0 | 0 | 1 | 1 | 0 | 1 | 1 |
|---|---|---|---|---|---|---|---|---|---|---|---|
| Alice's choice of base | + | x | x | + | + | x | + | x | x | x | + |
| what Alice sends | ↕ | ⤡ | ⤢ | ↔ | ↕ | ⤢ | ↔ | ⤡ | ⤢ | ⤡ | ↔ |
| Bob's choice of base | + | + | x | x | x | + | + | x | + | x | + |
| what Bob sends | ↕ | ↔ | ⤢ | ⤡ | ⤢ | ↕ | ↔ | ⤡ | ↕ | ⤡ | ↔ |

Figure 3

| random bit sequence | 0 | 1 | 0 | 1 | 0 | 0 | 1 | 1 | 0 | 1 | 1 |
|---|---|---|---|---|---|---|---|---|---|---|---|
| Alice`s choice of base | + | x | x | + | + | x | + | x | x | x | + |
| what Alice sends | ↕ | ⤢ | ⤢ | ↔ | ↕ | ⤢ | ↔ | ⤢ | ⤢ | ⤢ | ↔ |
| Bob`s choice of base | + | + | x | x | x | + | + | x | + | x | + |
| what Bob sends | ↕ | ↔ | ⤢ | ⤢ | ⤢ | ↕ | ↔ | ⤢ | ↕ | ⤢ | ↔ |
| raw key | 0 | | 0 | | | | 1 | 1 | | 1 | 1 |

Figure 4

Figure 5

Figure 6

Figure 7

Figure 8

Europäisches
Patentamt
European
Patent Office
Office européen
des brevets

# EUROPEAN SEARCH REPORT

Application Number

EP 20 16 5052

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 546 514 A (TOSHIBA RES EUROPE LTD [GB]) 26 July 2017 (2017-07-26) <br> * page 9, lines 5-8; figures 1,4,7 * <br> * page 10, paragraph 9-23 * <br> * page 13, paragraph 25-31 * <br> ----- | 1-15 | INV. <br> H04L9/08 |
| X | GB 2 559 801 A (TOSHIBA KK [JP]) 22 August 2018 (2018-08-22) <br> * page 11, line 18 - page 12, line 17; figure 1 * <br> * page 9, line 28 - page 10, line 8 * <br> * page 36, line 25 - page 37, line 11 * <br> ----- | 1-15 | |

TECHNICAL FIELDS
SEARCHED      (IPC)

H04L

The present search report has been drawn up for all claims

| Place of search | Date of completion of the search | Examiner |
|---|---|---|
| Munich | 22 September 2020 | Manet, Pascal |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 20 16 5052

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-2020

| Patent document cited in search report | | Publication date | Patent family member(s) | | Publication date |
|---|---|---|---|---|---|
| GB 2546514 | A | 26-07-2017 | GB | 2546514 A | 26-07-2017 |
| | | | JP | 6303034 B2 | 28-03-2018 |
| | | | JP | 2017130932 A | 27-07-2017 |
| | | | US | 2017222731 A1 | 03-08-2017 |
| GB 2559801 | A | 22-08-2018 | GB | 2559801 A | 22-08-2018 |
| | | | JP | 6602410 B2 | 06-11-2019 |
| | | | JP | 2018137739 A | 30-08-2018 |
| | | | US | 2018241553 A1 | 23-08-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. H. BENNETT ; G. BRASSARD.** Quantum cryptography: Public key distribution and coin tossing. *Proceedings of IEEE International Conference on Computers, Systems and Signal Processing,* 1984, vol. 175, 8